# EUROPEAN PATENT APPLICATION

(11) **EP 4 778 863 A1**
(43) Date of publication of application: **22.07.2026**
(21) Application number: 25864529.0
(22) Date of filing: 28.05.2025
(51) Int. Cl.: B65G 47/68, B65G 47/88, H01M 50/256

(54) **SECONDARY BATTERY TRANSFER DEVICE**

(30) Priority: 26.11.2024 KR 20240171067
(71) Applicant: LG ENERGY SOLUTION, LTD., Seoul 07335 (KR)
(72) Inventor: KIM, Dae Hyun, Daejeon 34122 (KR); KIM, Myung Ki, Daejeon 34122 (KR); HAN, Myoung Dae, Daejeon 34122 (KR)
(74) Representative: Goddar, Heinz J.
(86) International application number: PCT/KR2025/007296
(87) International publication number: WO 2026/116627

(57) **Abstract**

The present disclosure relates to a secondary battery transfer device, and more specifically, to a secondary battery transfer device that may efficiently merge batteries together even if the number of lines through which secondary batteries are transferred is reduced, and may prevent an increase in the defect rate of batteries or delays in the transfer of batteries.

## Description

### TECHNICAL FIELD

### CROSS-REFERENCE TO RELATED APPLICATIONS

The present application is based on and claims priority from Korean Patent Application No. 10-2024-0171067, filed on November 26, 2024, with the Korean Intellectual Property Office, the disclosure of which is incorporated herein in its entirety by reference.

### TECHNICAL FIELD

The present disclosure relates to a secondary battery transfer device, and more specifically, to a secondary battery transfer device that may efficiently merge batteries together even if the number of lines through which secondary batteries are transferred is reduced, and may prevent an increase in the defect rate of batteries or delays in the transfer of batteries.

### BACKGROUND ART

In general, there are various types of secondary batteries, such as nickel cadmium batteries, nickel hydrogen batteries, lithium-ion batteries, lithium-ion polymer batteries, and lithium metal batteries. These secondary batteries are widely used not only in small products such as smartphones, smart watches, smart rings, smart glasses, portable gaming devices, and electric bicycles, but also in large products requiring high power such as electric vehicles or hybrid vehicles, in energy storage systems (ESSs) storing surplus generated power or renewable energy, and in power storage devices for backup.

After being manufactured, secondary batteries are inspected for damage and defects, and then finally assembled into battery modules or shipped as products themselves. In order to go through these various processes, secondary batteries are continuously transferred to the corresponding process rooms or the places where the equipment is positioned.

However, as many secondary batteries are transferred in each process, the number of transfer lines may increase or decrease due to various issues such as space limitations and economic feasibility. However, if the number of transfer lines decreases, a bottleneck phenomenon occurs, which may cause secondary batteries to accumulate in a certain area, reducing the transfer speed, and may even cause secondary batteries to fall off the transfer line or equipment to malfunction. Therefore, when the number of lines through which secondary batteries are transferred decreases, a technology for efficiently merging secondary batteries together is required.

### SUMMARY

### TECHNICAL PROBLEM

The present disclosure is directed to providing a secondary battery transfer device capable of efficiently merging secondary batteries together when the number of lines through which secondary batteries are transferred is reduced.

The technical problems of the present disclosure are not limited to the above-described problems, and other problems not mentioned herein may be clearly understood by those skilled in the art from the following description of the present disclosure.

### TECHNICAL SOLUTION

A secondary battery transfer device according to embodiments of the present disclosure for solving the above-described problems includes a first transfer line and a second transfer line through which a plurality of batteries are respectively transferred; a merging line where the plurality of batteries respectively transferred through the first transfer line and the second transfer line are merged and transferred; a passage formed between the first transfer line or the second transfer line and the merging line to allow the plurality of batteries to pass through; a guide that rotates to open and close the passage and guides the plurality of batteries to the merging line; and a hinge formed on one side of the passage and serving as a rotation axis of the guide.

Additionally, the secondary battery transfer device further includes a first stopper that opens and closes a movement path of the first transfer line; and a second stopper that opens and closes a movement path of the second transfer line.

Additionally, the first stopper opens the movement path of the first transfer line when the plurality of batteries are transferred through the first transfer line, and blocks the movement path of the first transfer line when the plurality of batteries are transferred through the second transfer line, and the second stopper opens the movement path of the second transfer line when the plurality of batteries are transferred through the second transfer line, and blocks the movement path of the second transfer line when the plurality of batteries are transferred through the first transfer line.

Additionally, the merging line is formed to extend from the first transfer line, and the passage is formed between the second transfer line and the merging line.

Additionally, when the battery transferred through the first transfer line pushes the guide, the guide rotates around the hinge to close the passage, and when the battery transferred through the second transfer line pushes the guide, the guide rotates around the hinge to open the passage.

Additionally, the passage includes a first passage formed between the first transfer line and the merging line; and a second passage formed between the second transfer line and the merging line.

Additionally, when the battery transferred through the first transfer line pushes the guide, the guide rotates around the hinge to open the first passage, and when the battery transferred through the second transfer line pushes the guide, the guide rotates around the hinge to open the second passage.

Other specific details of the present disclosure are included in the detailed description and drawings.

### ADVANTAGEOUS EFFECTS

According to embodiments of the present disclosure, at least the following effects are obtained.

Even if the number of lines through which secondary batteries are transferred is reduced, the batteries may be efficiently merged together, thereby alleviating bottlenecks to prevent the batteries from accumulating.

Additionally, since the guide rotates around the hinge and the battery pushes the guide to open and close the passage, the battery may be prevented from being damaged or caught between the guide and the transfer line.

The effects according to the present disclosure are not limited by the contents exemplified above, and more various effects are included in this specification.

### BRIEF DESCRIPTION OF THE DRAWINGS

FIG. 1 is a schematic diagram showing a state in which the movement path of the first transfer line 21 is opened in the conventional secondary battery transfer device 2.
FIG. 2 is a schematic diagram showing a state in which the movement path of the conventional first transfer line 21 is being blocked and the movement path of the second transfer line 22 is being opened.
FIG. 3 is a schematic diagram showing a state in which the movement path of the conventional second transfer line 22 is opened.
FIG. 4 is a schematic diagram showing a state in which the conventional guide 25 collides with the battery 3 while moving.
FIG. 5 is a schematic diagram showing a state in which the movement path of the first transfer line 11 is opened according to the first embodiment of the present disclosure.
FIG. 6 is a schematic diagram showing a state in which the movement path of the first transfer line 11 is being blocked and the movement path of the second transfer line 12 is being opened according to the first embodiment of the present disclosure.
FIG. 7 is a schematic diagram showing a state in which the movement path of the second transfer line 12 is opened according to the first embodiment of the present disclosure.
FIG. 8 is a schematic diagram showing a state in which the movement path of the second transfer line 12 is being blocked and the movement path of the first transfer line 11 is being opened according to the first embodiment of the present disclosure.
FIG. 9 is a schematic diagram showing a state in which the movement path of the first transfer line 11 is opened again according to the first embodiment of the present disclosure.
FIG. 10 is a schematic diagram showing a state in which the movement path of the first transfer line 11a is opened according to the second embodiment of the present disclosure.
FIG. 11 is a schematic diagram showing a state in which the movement path of the first transfer line 11a is being blocked and the movement path of the second transfer line 12a is being opened according to the second embodiment of the present disclosure.
FIG. 12 is a schematic diagram showing a state in which the movement path of the second transfer line 12a is opened according to the second embodiment of the present disclosure.
FIG. 13 is a schematic diagram showing a state in which the movement path of the second transfer line 12a is being blocked and the movement path of the first transfer line 11a is being opened according to the second embodiment of the present disclosure.
FIG. 14 is a schematic diagram showing a state in which the movement path of the first transfer line 11a is opened again according to the first embodiment of the present disclosure.

### DETAILED DESCRIPTION

The advantages and features of the present disclosure, and the methods for achieving them, will become clear by referring to the embodiments described in detail below with the accompanying drawings. However, the present disclosure is not limited to the embodiments disclosed below, but may be implemented in various different forms, and the present embodiments are provided only to make the disclosure of the present disclosure complete and to fully inform those having ordinary skill in the art to which the present disclosure pertains of the scope of the disclosure, and the present disclosure is defined only by the scope of the claims. Throughout the specification, the same reference numerals refer to the same components.

Unless otherwise defined, all terms (including technical and scientific terms) used in this specification may be used in a sense that can be commonly understood by those having ordinary skill in the art to which the present disclosure pertains. Additionally, terms defined in commonly used dictionaries are not to be ideally or excessively interpreted unless explicitly and specifically defined.

The terms used in this specification are for the purpose of describing the embodiments and are not intended to limit the present disclosure. In this specification, the singular form includes the plural form unless specifically otherwise stated in the phrase. The terms "comprise" and/or "comprising" used in the specification do not exclude the presence or addition of one or more other components in addition to the components mentioned.

Hereinafter, preferred embodiments of the present disclosure will be described in detail with reference to the accompanying drawings.

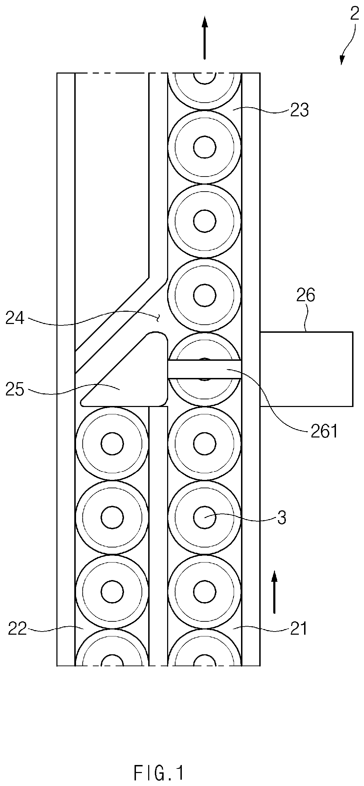

FIG. 1 is a schematic diagram showing a state in which the movement path of the first transfer line 21 is opened in the conventional secondary battery transfer device 2.

As illustrated in FIG. 1, a plurality of batteries 3 are respectively transferred through a first transfer line 21 and a second transfer line 22, and the number of transfer lines is reduced from two to one. At this time, a merging line 23 is formed to extend from the first transfer line 21, and a passage 24 may be formed between the second transfer line 22 and the merging line 23. First, the plurality of batteries 3 transferred through the first transfer line 21 continue to be transferred and enter the merging line 23.

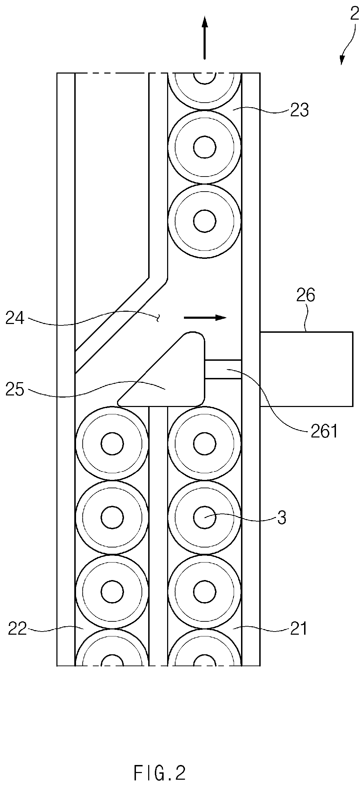

FIG. 2 is a schematic diagram showing a state in which the movement path of the conventional first transfer line 21 is being blocked and the movement path of the second transfer line 22 is being opened.

When a certain number of batteries 3 among the plurality of batteries 3 enter the merging line 23 through the first transfer line 21, an actuator 26 operates as illustrated in FIG. 2 to move a guide 25 connected through an arm 261. At this time, the guide 25 moves linearly from the second transfer line 22 side to the first transfer line 21 side.

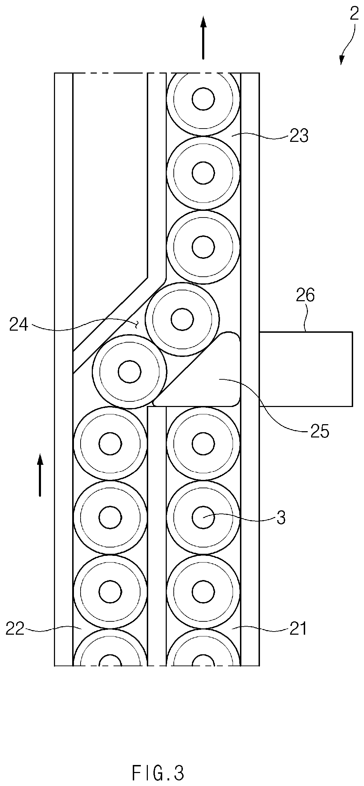

FIG. 3 is a schematic diagram showing a state in which the movement path of the conventional second transfer line 22 is opened.

As illustrated in FIG. 3, while the guide 25 moves completely toward the first transfer line 21, it opens the passage 24 formed between the second transfer line 22 and the merging line 23. Then, since the movement path of the second transfer line 22 is opened, a plurality of batteries 3 transferred through the second transfer line 22 pass through the passage 24 and enter the merging line 23.

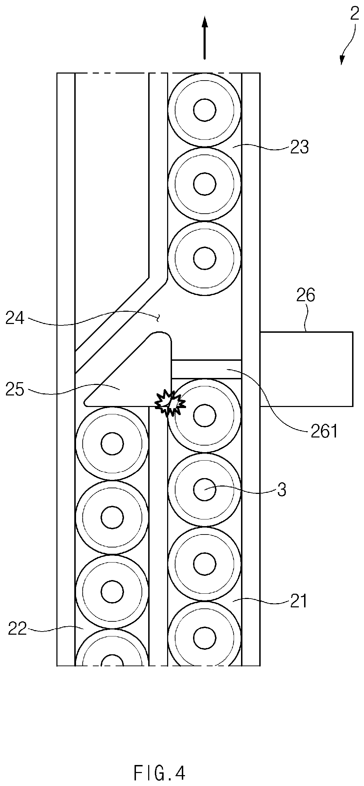

FIG. 4 is a schematic diagram showing a state in which the conventional guide 25 collides with the battery 3 while moving.

However, conventionally, as illustrated in FIG. 4, there was a problem that the guide 25 collided with the battery 3 while moving to cause damage to the battery 3, or the battery 3 was caught between the guide 25 and the transfer lines 21, 22 so that the guide 25 could not to move further. As a result, the defect rate of the battery 3 increased, and the transfer of the batteries 3 could be delayed.

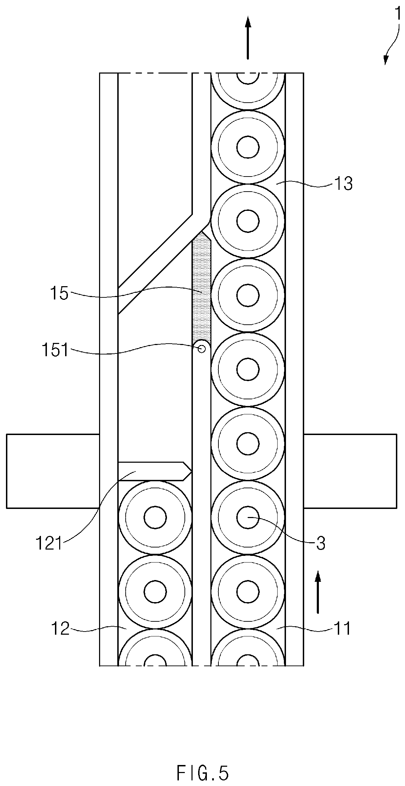

FIG. 5 is a schematic diagram showing a state in which the movement path of the first transfer line 11 is opened according to the first embodiment of the present disclosure.

A secondary battery transfer device 1 according to the present disclosure includes a first transfer line 11 and a second transfer line 12 through which a plurality of batteries 3 are respectively transferred, and a merging line 13 where the plurality of batteries 3 respectively transferred through the first transfer line 11 and the second transfer line 12 are merged and transferred. And, a passage 14 is formed between the first transfer line 11 or the second transfer line 12 and the merging line 13 to allow the plurality of batteries 3 to pass through. Additionally, the secondary battery transfer device 1 further includes a guide 15 that rotates to open and close the passage 14 and guides the plurality of batteries 3 to the merging line 13, and a hinge 151 formed on one side of the passage 14 and serving as a rotation axis of the guide 15.

Additionally, the secondary battery transfer device 1 according to the present disclosure may further include a first stopper 111 that opens and closes the movement path of the first transfer line 11 and a second stopper 121 that opens and closes the movement path of the second transfer line 12.

Hereinafter, although the transfer lines 11, 12 are described as being two, the number of a plurality of transfer lines is not limited according to the present disclosure. That is, the first transfer line 11 and the second transfer line 12 do not necessarily limit the number of transfer lines of the present disclosure to two, but may be understood as any two selected from the plurality of transfer lines.

A conveyor belt or the like may be used to form the transfer line, but the present disclosure is not limited thereto, and various configurations may be used as long as a plurality of batteries 3 may be transferred.

As illustrated in FIG. 5, a plurality of batteries 3 are respectively transferred through the first transfer line 11 and the second transfer line 12, and then the number of transfer lines is reduced from two to one. At this time, according to the first embodiment of the present disclosure, the merging line 13 may be formed to extend from the first transfer line 11, and a passage 14 may be formed between the second transfer line 12 and the merging line 13.

First, a plurality of batteries 3 transferred through the first transfer line 11 continue to be transferred and enter the merging line 13. Then, the first stopper 111 opens the movement path of the first transfer line 11, and the second stopper 121 blocks the movement path of the second transfer line 12. As a result, the plurality of batteries 3 may not be transferred through the second transfer line 12 and are stopped.

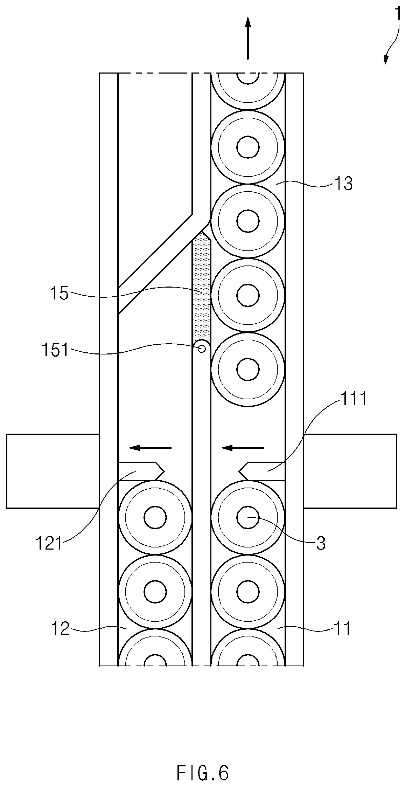

FIG. 6 is a schematic diagram showing a state in which the movement path of the first transfer line 11 is being blocked and the movement path of the second transfer line 12 is being opened according to the first embodiment of the present disclosure.

When a certain number of batteries 3 among the plurality of batteries 3 enter the merging line 13 through the first transfer line 11, as illustrated in FIG. 6, the first stopper 111 blocks the movement path of the first transfer line 11, and the second stopper 121 opens the movement path of the second transfer line 12.

In FIG. 6, the first stopper 111 and the second stopper 121 are illustrated to move linearly in the width direction of the first transfer line 11 and the second transfer line 12, respectively, but the present disclosure is not limited thereto, and the first stopper 111 and the second stopper 121 may move in various ways, such as linear motion in the depth direction or rotational motion as long as they may open and close the first transfer line 11 and the second transfer line 12, respectively.

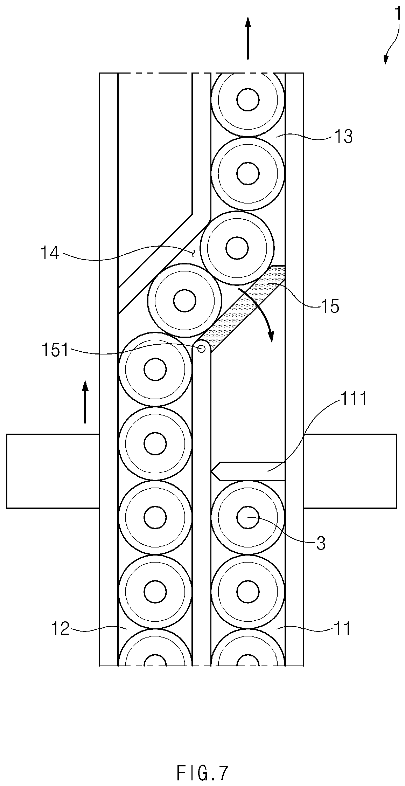

FIG. 7 is a schematic diagram showing a state in which the movement path of the second transfer line 12 is opened according to the first embodiment of the present disclosure.

When the first stopper 111 completely blocks the movement path of the first transfer line 11 and the second stopper 121 completely opens the movement path of the second transfer line 12, a plurality of batteries 3 are transferred through the second transfer line 12 as illustrated in FIG. 7. And, the batteries 3 transferred through the second transfer line 12 push the guide 15.

According to the first embodiment of the present disclosure, the guide 15 rotates around the hinge 151 to open and close the passage 14 and guides the plurality of batteries 3 to the merging line 13. And, the hinge 151 is formed on one side of the passage 14 and becomes a rotation axis when the guide 15 rotates. Therefore, when the battery 3 transferred through the second transfer line 12 pushes the guide 15, the guide 15 rotates around the hinge 151 to open the passage 14. Then, the second transfer line 12 and the merging line 13 are connected to each other through the passage 14, and the plurality of batteries 3 transferred through the second transfer line 12 enter the merging line 13.

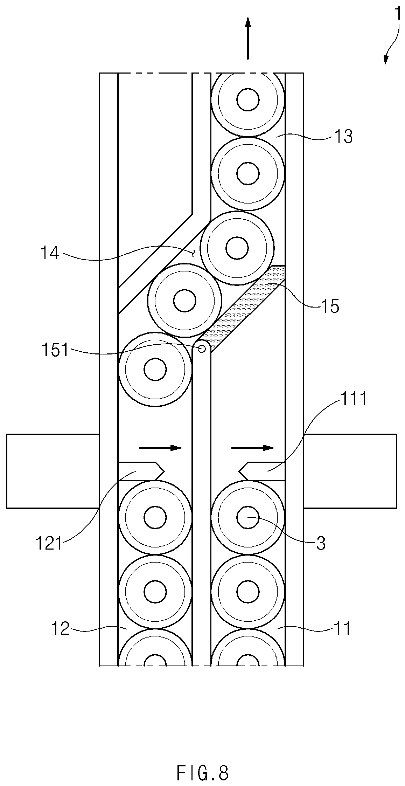

FIG. 8 is a schematic diagram showing a state in which the movement path of the second transfer line 12 is being blocked and the movement path of the first transfer line 11 is being opened according to the first embodiment of the present disclosure.

When a certain number of batteries 3 among the plurality of batteries 3 enter the merging line 13 through the second transfer line 12, as illustrated in FIG. 8, the second stopper 121 blocks the movement path of the second transfer line 12, and the first stopper 111 opens the movement path of the first transfer line 11.

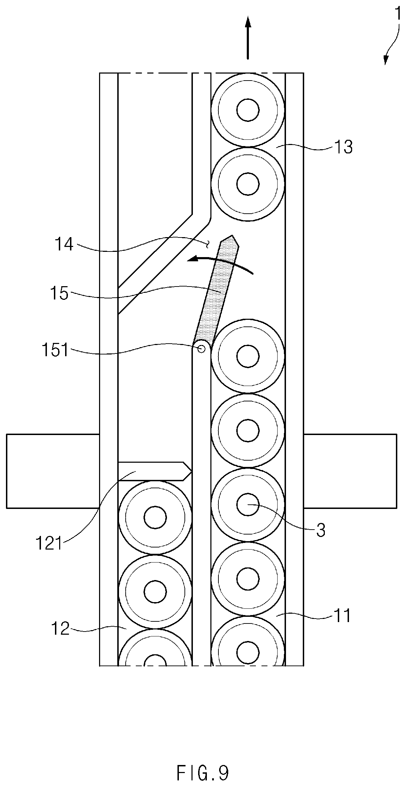

FIG. 9 is a schematic diagram showing a state in which the movement path of the first transfer line 11 is opened again according to the first embodiment of the present disclosure.

When the second stopper 121 completely blocks the movement path of the second transfer line 12 and the first stopper 111 completely opens the movement path of the first transfer line 11, a plurality of batteries 3 are transferred through the first transfer line 11 as illustrated in FIG. 9. And, when the batteries 3 transferred through the first transfer line 11 push the guide 15, the guide 15 rotates around the hinge 151 to close the passage 14. Then, the first transfer line 11 and the merging line 13 are connected to each other again, and the plurality of batteries 3 transferred through the first transfer line 11 enter the merging line 13.

In this way, by guiding the plurality of batteries 3 transferred along the first transfer line 11 and the second transfer line 12 to enter the merging line 13 alternately in a certain number, the batteries 3 may be efficiently merged together, thereby alleviating bottlenecks to prevent the batteries 3 from accumulating. Additionally, since the guide 15 rotates around the hinge 151 and the battery 3 pushes the guide 15 to open and close the passage 14, the battery 3 may be prevented from being damaged or caught between the guide 15 and the transfer lines 11, 12. As a result, it is possible to reduce the defect rate of the battery 3 and prevent delays in the transfer of the batteries 3.

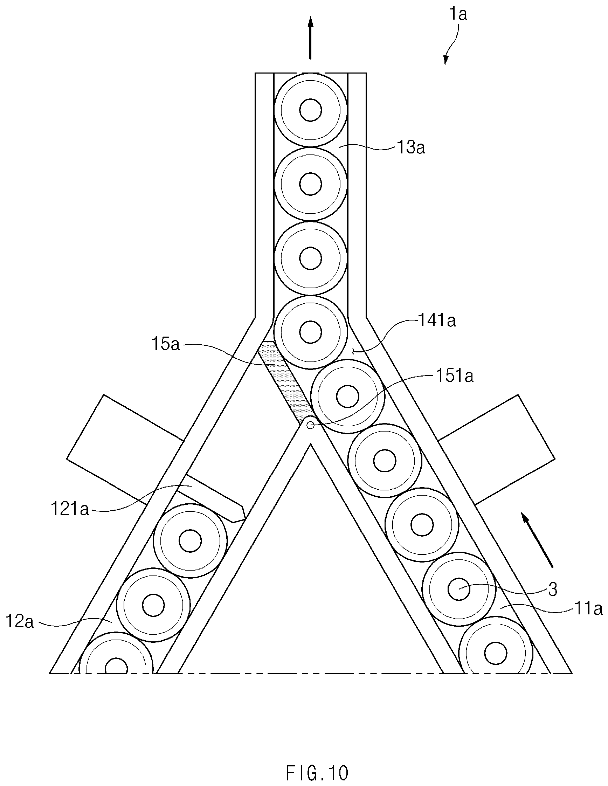

FIG. 10 is a schematic diagram showing a state in which the movement path of the first transfer line 11a is opened according to the second embodiment of the present disclosure.

According to the first embodiment of the present disclosure, the merging line 13 is formed to extend from the first transfer line 11, and a passage is formed between the second transfer line 12 and the merging line 13. And, when the batteries 3 transferred through the first transfer line 11 push the guide 15, the guide 15 rotates around the hinge 151 to close the passage, and when the batteries 3 transferred through the second transfer line 12 push the guide 15, the guide 15 rotates around the hinge 151 to open the passage.

On the other hand, in the secondary battery transfer device 1a according to the second embodiment of the present disclosure, as illustrated in FIG. 10, the merging line 13a extends from both the first transfer line 11a and the second transfer line 12a, and is naturally formed as one line. And, the passage may include a first passage 141a formed between the first transfer line 11a and the merging line 13a, and a second passage 142a formed between the second transfer line 12a and the merging line 13a.

First, the first transfer line 11a and the merging line 13a are connected to each other through the first passage 141a, and the plurality of batteries 3 being transferred through the first transfer line 11a enter the merging line 13a. And, the first stopper 111a opens the movement path of the first transfer line 11a, and the second stopper 121a blocks the movement path of the second transfer line 12a. As a result, the plurality of batteries 3 may not be transferred through the second transfer line 12a and are stopped.

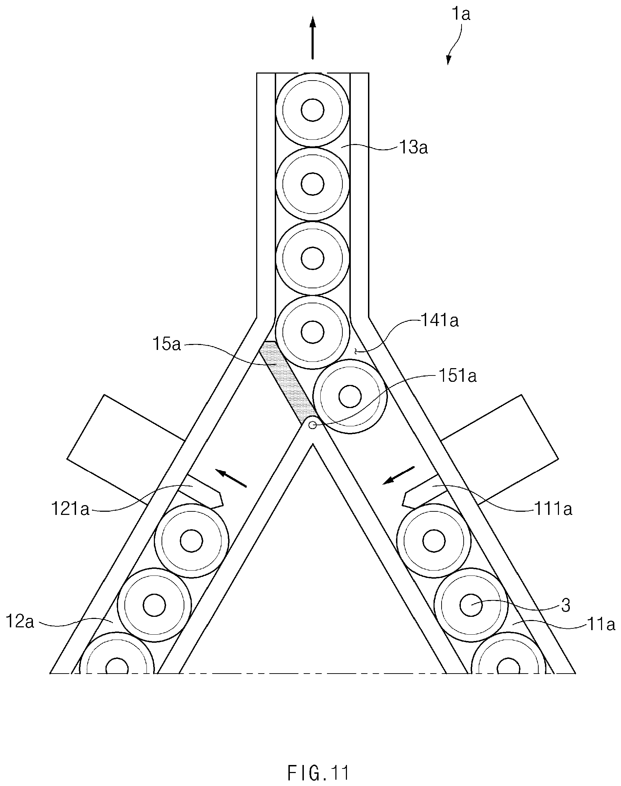

FIG. 11 is a schematic diagram showing a state in which the movement path of the first transfer line 11a is being blocked and the movement path of the second transfer line 12a is being opened according to the second embodiment of the present disclosure.

When a certain number of batteries 3 among the plurality of batteries 3 enter the merging line 13a through the first transfer line 11a, as illustrated in FIG. 11, the first stopper 111a blocks the movement path of the first transfer line 11a, and the second stopper 121a opens the movement path of the second transfer line 12a.

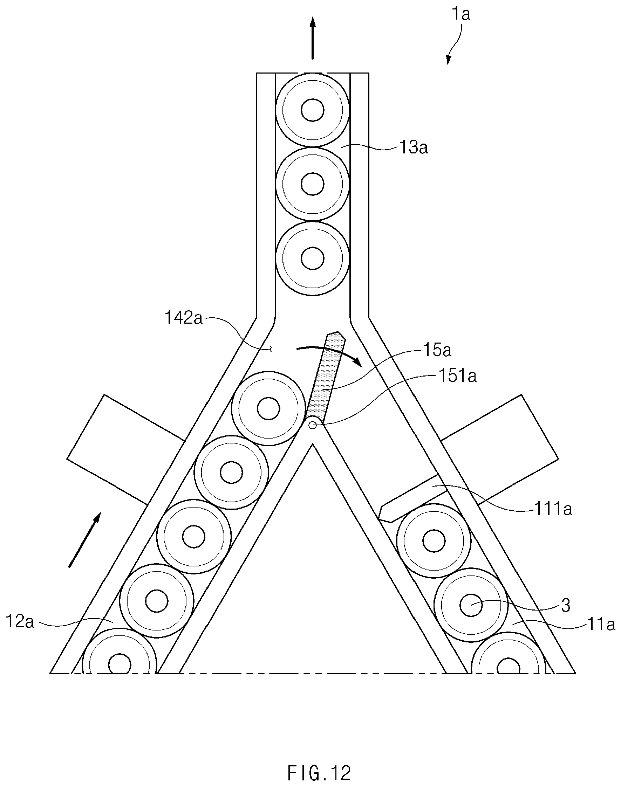

FIG. 12 is a schematic diagram showing a state in which the movement path of the second transfer line 12a is opened according to the second embodiment of the present disclosure.

When the first stopper 111a completely blocks the movement path of the first transfer line 11a and the second stopper 121a completely opens the movement path of the second transfer line 12a, a plurality of batteries 3 are transferred through the second transfer line 12a as illustrated in FIG. 12. And, when the batteries 3 transferred through the second transfer line 12a push the guide 15a, the guide 15a rotates around the hinge 151a to open the second passage 142a and close the first passage 141a at the same time. Then, the second transfer line 12a and the merging line 13a are connected to each other through the second passage 142a, and the plurality of batteries 3 being transferred through the second transfer line 12a enter the merging line 13a.

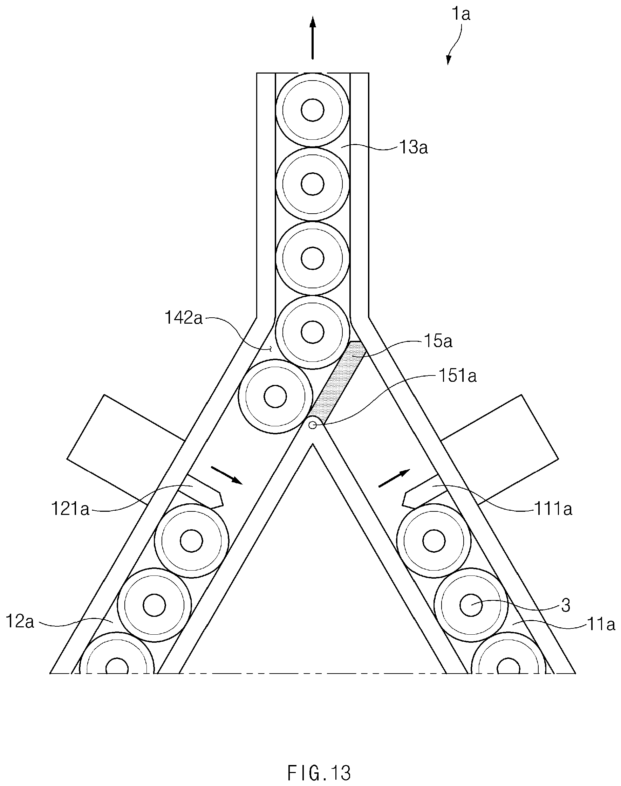

FIG. 13 is a schematic diagram showing a state in which the movement path of the second transfer line 12a is being blocked and the movement path of the first transfer line 11a is being opened according to the second embodiment of the present disclosure.

When a certain number of batteries 3 among the plurality of batteries 3 enter the merging line 13a through the second transfer line 12a, as illustrated in FIG. 13, the second stopper 121a blocks the movement path of the second transfer line 12a, and the first stopper 111a opens the movement path of the first transfer line 11a.

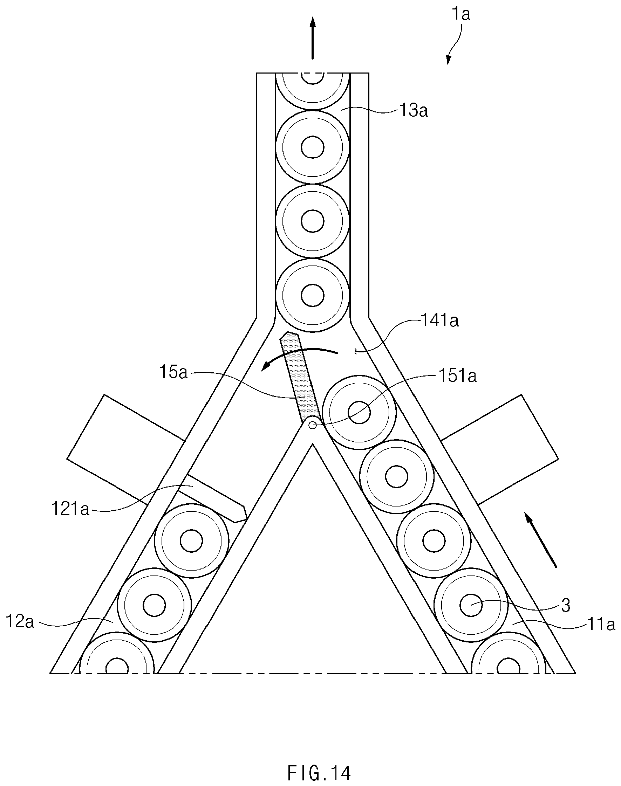

FIG. 14 is a schematic diagram showing a state in which the movement path of the first transfer line 11a is opened again according to the first embodiment of the present disclosure.

When the second stopper 121a completely blocks the movement path of the second transfer line 12a and the first stopper 111a completely opens the movement path of the first transfer line 11a, a plurality of batteries 3 are transferred through the first transfer line 11a as illustrated in FIG. 14. And, when the batteries 3 transferred through the first transfer line 11a push the guide 15a, the guide 15a rotates around the hinge 151a to open the first passage 141a and close the second passage 142a at the same time. Then, the first transfer line 11a and the merging line 13a are connected to each other again through the first passage 141a, and the plurality of batteries 3 being transferred through the first transfer line 11a enter the merging line 13a.

Those having ordinary skill in the art to which the present disclosure pertains will understand that the present disclosure may be implemented in other specific forms without changing the technical idea or essential characteristics thereof. Therefore, it should be understood that the embodiments described above are exemplary and not limiting in all respects. The scope of the present disclosure is indicated by the appended claims described below rather than the detailed description above, and various embodiments derived from the meaning and scope of the claims and the equivalent concepts thereof should be construed as being included in the scope of the present disclosure.

## Claims

1. A secondary battery transfer device comprising:
a first transfer line and a second transfer line through which a plurality of batteries are respectively transferred;
a merging line where the plurality of batteries respectively transferred through the first transfer line and the second transfer line are merged and transferred;
a passage formed between the first transfer line or the second transfer line and the merging line to allow the plurality of batteries to pass through;
a guide that rotates to open and close the passage and guides the plurality of batteries to the merging line; and
a hinge formed on one side of the passage and serving as a rotation axis of the guide.

2. The secondary battery transfer device according to claim 1, further comprising:
a first stopper that opens and closes a movement path of the first transfer line; and
a second stopper that opens and closes a movement path of the second transfer line.

3. The secondary battery transfer device according to claim 2,
wherein the first stopper opens the movement path of the first transfer line when the plurality of batteries are transferred through the first transfer line, and blocks the movement path of the first transfer line when the plurality of batteries are transferred through the second transfer line, and
the second stopper opens the movement path of the second transfer line when the plurality of batteries are transferred through the second transfer line, and blocks the movement path of the second transfer line when the plurality of batteries are transferred through the first transfer line.

4. The secondary battery transfer device according to claim 1,
wherein the merging line is formed to extend from the first transfer line, and
the passage is formed between the second transfer line and the merging line.

5. The secondary battery transfer device according to claim 4,
wherein when the battery transferred through the first transfer line pushes the guide, the guide rotates around the hinge to close the passage, and
when the battery transferred through the second transfer line pushes the guide, the guide rotates around the hinge to open the passage.

6. The secondary battery transfer device according to claim 1,
wherein the passage comprises:
a first passage formed between the first transfer line and the merging line; and
a second passage formed between the second transfer line and the merging line.

7. The secondary battery transfer device according to claim 6,
wherein when the battery transferred through the first transfer line pushes the guide, the guide rotates around the hinge to open the first passage, and
when the battery transferred through the second transfer line pushes the guide, the guide rotates around the hinge to open the second passage.
